Europäisches Patentamt

European Patent Office

Office européen des brevets

(19)

(11) EP 0 750 760 B1

(12) **EUROPEAN PATENT SPECIFICATION**

(45) Date of publication and mention
of the grant of the patent:
**16.09.1998 Bulletin 1998/38**

(21) Application number: **95912400.9**

(22) Date of filing: **14.03.1995**

(51) Int Cl.⁶: **G06F 1/20**

(86) International application number:
**PCT/IT95/00036**

(87) International publication number:
**WO 95/25296 (21.09.1995 Gazette 1995/40)**

(54) **DEVICE FOR THERMAL CONTROL OF A CENTRAL PROCESSING UNIT**

**TEMPERATURSTEUERUNGSVORRICHTUNG EINER ZENTRALEN VERARBEITUNGSEINHEIT**

**DISPOSITIF DE REGULATION DE LA TEMPERATURE D'UNE UNITE CENTRALE**

(84) Designated Contracting States:
**DE FR GB**

(30) Priority: **15.03.1994 IT TO940179**

(43) Date of publication of application:
**02.01.1997 Bulletin 1997/01**

(73) Proprietor: **Ing. C. Olivetti & C., S.p.A.**
**10015 Ivrea (IT)**

(72) Inventor: **CERUTTI, Walter**
**I-10015 Ivrea (IT)**

(74) Representative: **Casuccio, Carlo et al**
**Olivetti S.p.A.**
**Via G. Jervis 77**
**10015 Ivrea (Torino) (IT)**

(56) References cited:
**EP-A- 0 489 326      US-A- 5 237 486**

- **PATENT ABSTRACTS OF JAPAN vol. 017 no. 614 (P-1642) ,11 November 1993 & JP,A,05 189077 (CANON INC) 30 July 1993,**
- **PATENT ABSTRACTS OF JAPAN vol. 012 no. 458 (P-794) ,2 December 1988 & JP,A,63 180118 (MITSUBISHI ELECTRIC CORP) 25 July 1988,**
- **PATENT ABSTRACTS OF JAPAN vol. 013 no. 203 (P-870) ,15 May 1989 & JP,A,01 023317 (MITSUBISHI ELECTRIC CORP) 26 January 1989,**

## Description

### FIELD OF THE INVENTION

The present invention relates to a device for the thermal control of a central processing unit (CPU) having a plurality of operating frequencies, comprising a thermal sensor capable of detecting the temperature level attained by the central processing unit during normal functioning thereof and generating a signal which is proportional to the temperature of the CPU.

### BACKGROUND OF THE INVENTION

A device is known for the thermal control of the CPU, in which the temperature sensor is connected to a comparison circuit for generating a control signal which is indicative of exceeding a predetermined threshold which is rigidly imposed on the comparison circuit itself. When that threshold is exceeded the control signal acts directly on the control circuits of the CPU which interrupt generation of the timing signal, whereby the CPU, which then no longer performs its functions in a continuous manner, increases the length of the processing time. A reduction in the temperature below the critical limit reactivates the normal operative functions of the CPU.

That thermal control method does not permit linear control of the variation in temperature in dependence on time, thus penalising the speed of processing of the CPU for temperature values which are close to the limit value.

Another known device uses statistical/probabilistic methods for thermal control of the CPU, with algorithms which identify the limit temperature by way of the values of the level of activity of the CPU, which correspond to conditions of inactivity, equilibrium and thermal runaway. After a first predetermined period of operation at maximum frequency, there is provided an indication of temperature which is "probably" close to the limit threshold, from which there is derived an automatic reduction in the operating frequency of the CPU. After a second predetermined period of operation at reduced frequency, there is provided an indication of temperature which "probably" returns to values of the standard, from which there is derived an automatic increase in the operating frequency of the CPU.

That method provides statistical and non-real indications and does not take account of important factors in the thermal control of the CPU, such as for example the temperature of the environment in which the CPU itself is operating.

From the document EP-A-489326 it is known a cooling system for an electronic computer having components operating at several frequencies, wherein a thermal sensing circuit is provided for generating a signal proportional to the temperature of these components and control means are connected to the thermal sensing circuit and to such components, for varying the operating frequency of these latter in dependence on the temperature signal.

From JP-A-63180118 it is also known a control circuit which compares the temperature of a computer system with maximum and minimum set temperature levels and responsively increases or decreases the working frequency of the computer system, in such a way as to vary the working frequency in an inverse proportional way with respect to such a temperature.

Moreover, from JP-A-1023317 it is known another control circuit adapted for controlling the temperature of a computer system by varying its working frequency, wherein the temperature of the computer is monitored by a sensor and processed by a program which controls the selection of the working frequency, in such a way as to keep the temperature within an allowable range.

All the above identified embodiments for controlling the temperature have the disadvantage of being complex, expensive and not adapted for being easily settable in order to vary the allowable levels of the temperature of the computer system.

### SUMMARY OF THE INVENTION

The object of the present invention is to provide a device for precisely, quickly and continuously controlling the temperature of a central processing unit and having a low cost, wherein it is very easy to set the temperature range within which the central processing unit has to work. This latter is constituted by way of example by the CPU of an electronic computer, and a thermal sensor is coupled to the CPU for generating a signal proportional to the temperature of the CPU. A control circuit is connected to the CPU, and to the sensor and varies the operating frequency of the CPU in dependence on the signal from the sensor.

The invention is defined with more precision in the appended claims to which reference should now be made.

### BRIEF DESCRIPTION OF THE DRAWINGS

This and other features of the present invention will be apparent from the following description of a preferred embodiment given by way of example with reference to the accompanying drawings in which:

Figure 1 is a partly sectional side view of an electronic computer containing a device embodying to the invention;
Figure 2 shows an electrical block circuit diagram of the electronic unit of the computer shown in Figure 1; and
Figure 3 shows a graph illustrating the fluctuation in temperature in dependence on time for various operating frequencies of the central unit of the computer shown in Figure 1.

## DETAILED DESCRIPTION OF A PREFERRED EMBODIMENT

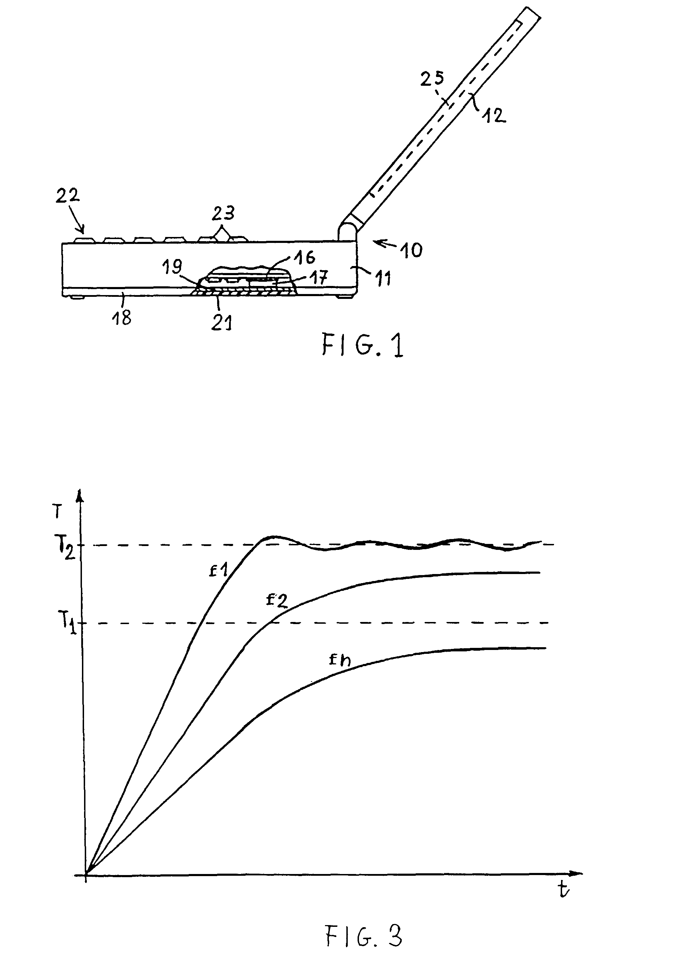

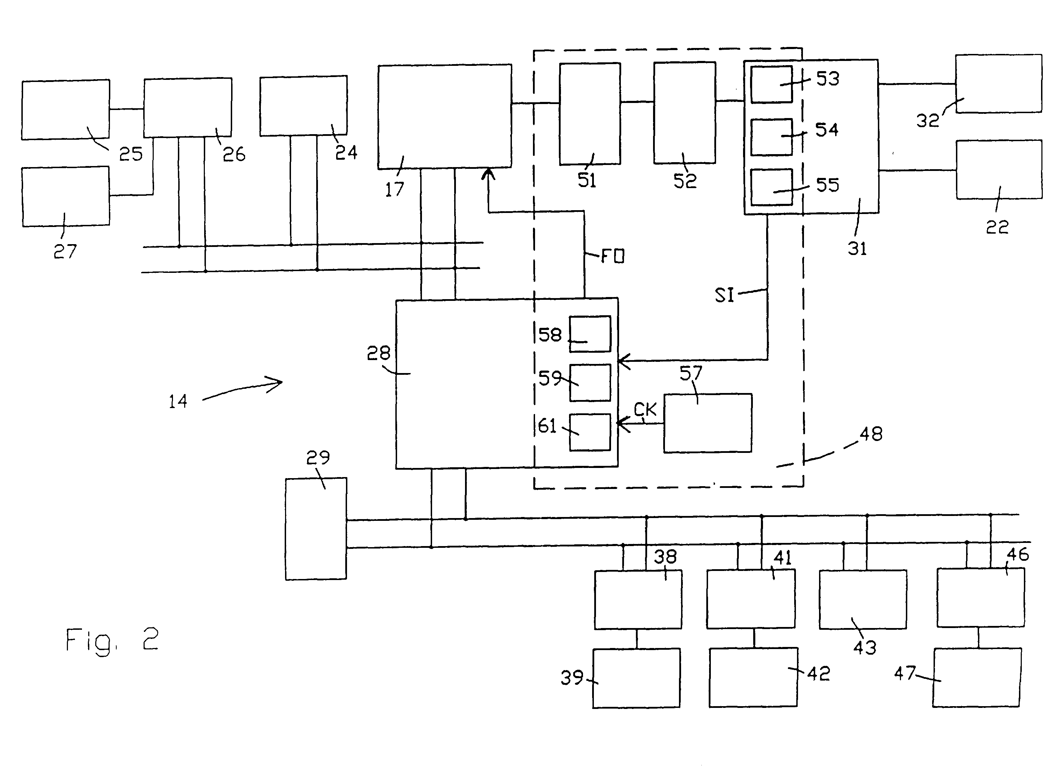

Referring to Figures 1 and 2, an electronic computer 10 on which is mounted a device 48 embodying the present invention comprises a base body 11 of substantially parallelepipedic shape and a cover 12 which is pivotally mounted on the base body 11.

Mounted on an upper surface of the base body 11 is an alphanumeric keyboard 22 provided with keys 23 for the input of alphanumeric data into the computer 10 and a display screen 25 supported by the cover 12.

In its interior the base body 11 contains an electronic unit 14 for control and management of the computer 10, which also includes the device 48 embodying the present invention. The electronic unit 14 which is shown in diagrammatic unitary manner in the block circuit diagram illustrated in Figure 2 can be produced on one or more boards 16 which, in the case of a plurality of boards, are connected and disposed in superposed relationship during assembly. The sectional view in Figure 1 shows the position of a board 16 containing a central processing unit (CPU) 17. The latter occupies the most outward position in direct contact with a lower part 18 of the body structure of the computer 10. The lower part 18 is formed by an external surface 21 of plastics material or of other equivalent material and by a metallic internal surface 19. The latter constitutes an effective radiator for dissipation of the thermal energy produced by the CPU 17 during operation thereof.

With reference to Figure 2 the electronic unit 14 further comprises a random access memory (RAM) 24, a video controller 26 for control and management of the functions of the screen 25, a read only video memory (ROM video) 27 and a read only system memory (ROM BIOS) 29.

The base body 11 also accommodates in its interior a hard disk unit (HDU) 39, a floppy disk unit (FDU) 42, a serial and parallel line management unit 43 and a PCMCIA-technology unit 47. The electronic unit 14 also comprises a circuit 31 for control of the keyboard 22, a keyboard memory unit 32, a circuit 38 for control of the hard disk unit 39, a circuit 41 for control of the floppy disk unit 42, and a unit 46 for control of the PCMCIA unit 47. Those components will not be further described herein insofar as they are known per se.

The device 48 for thermal control of the CPU 17 comprises a thermal sensor 51 connected to the CPU itself for detecting the temperature thereof and for generating an analog signal proportional to that temperature.

Figure 3 shows the variation in the temperature of the CPU 17 in dependence on time and for different operating frequencies of the CPU, with a frequency f1 which is greater than a frequency f2 which in turn is greater than a frequency fn. The CPU 17 increases the production of heat upon an increase in its operating frequency, whereby there is an increase in the slope of the curve in respect of thermal dissipation and a reduction in the time within which the temperature of the CPU exceeds a duty threshold T1 and reaches a predetermined limit value T2.

The power dissipated by the CPU is equal to:

$$P = C \times V^2 \times f,$$

in which P denotes the power dissipated, C denotes the equivalent capacity of the electronic unit 14, V denotes the supply voltages of the CPU 17 and f denotes the operating frequency of the CPU. It will be seen from the foregoing formula that the only physical parameter on which it is possible to act in order to be able to control the temperature of the CPU is the operating frequency.

The device 48 further comprises an amplifier 52 for amplifying the analog signal generated by the sensor 51 to a suitable voltage level and a conversion stage 53 for conversion of the suitably amplified analog signal into a resulting digital signal or "word" for example of 8 bits.

The conversion stage 53 is contained in a second processing unit, ie in the keyboard controller 31. The controller 31 also comprises in its interior a memory 54 and a comparison circuit 55 (COMP). The comparison circuit 55 compares the thermal signal which is suitably digitized by the conversion stage 53 (A/D) to the critical temperature value T2 contained in the memory 54 (MEM). When that limit value is reached the comparison circuit 55 generates an interrupt signal SI which is indicative of that condition of coincidence.

The interrupt signal SI is read and managed by a control circuit 28 (CHIP SET)for the basic functions of the CPU 17, which receives a timing signal (base clock) CK generated by a generating circuit 57. The control circuit 28 comprises a circuit 58 for management of the interrupt signal SI, a reception circuit 59 for the signal CK and a division circuit 61 which, from the signal CK, generates a timing signal FO in respect of the operating frequency of the CPU.

By reducing the operating frequency FO of the CPU 17, a smaller amount of thermal energy is produced, and thus there is a resulting reduction in the temperature thereof. The CPU is restored to the higher operating frequency when its temperature falls below the threshold T2, to be freshly adjusted again to a lower frequency when the threshold T2 is surpassed.

The thermal control device embodying the invention permits the CPU 17 always to operate in the proximity of the maximum admissible operating frequency without uncontrolledly exceeding the limit threshold T2.

## Claims

1. A device (48) for the thermal control of a central processing unit (CPU) (17) operable under the control of a chip set (28) for working at a plurality of operating frequencies (fl-fn), comprising

a thermal sensor (51) for detecting the temperature of said CPU and generating a signal proportional to said temperature, and
control means connected to said CPU (17) and to said thermal sensor (51) for varying the operating frequency of said CPU in dependence on said signal,

characterised in that said control means comprise a programmable memory (54) of a keyboard controller (31), adapted for storing a programmable critical temperature value (T2), and

comparing means (55) for comparing a signal corresponding to said proportional signal with said programmable critical value and generating an interrupt signal (SI) when the temperature of said CPU reaches said programmable critical temperature value (T2), and
in that said chip set comprises means responsive to said interrupt signal (SI) for decreasing or increasing the operating frequency of the CPU, when its temperature exceeds or respectively falls under said predetermined critical value (T2) of temperature.

2. A device for thermal control of a CPU according to claim 1, comprising a generator (57) for a timing signal (CK), characterised in that said means for decreasing or increasing the operating frequency of the CPU comprise means (58) for receiving said interrupt signal (SI), means for the division of said timing signal (CK) and means (61) for generating a reduced operating frequency in response to the division of said timing signal (CK), when the temperature of the CPU (17) increases to said programmable critical temperature value (T2)

3. A device for thermal control of a CPU according to claim 1, wherein said CPU is mounted in an electronic computer comprising a body structure having at least one metallic internal wall (19), characterised in that at least a part of an external surface of said CPU (17) is held constantly in contact with said metallic internal wall, whereby said metallic internal wall performs the function of dissipating the heat developed by the CPU during the working thereof.

**Patentansprüche**

1. Vorrichtung (48) zur thermischen Steuerung einer Zentraleinheit (CPU) (17), die unter der Steuerung einer Chip-Gruppe (28) zum Arbeiten auf mehreren Betriebsfrequenzen (f1 -fn) betätigbar ist, bestehend aus:

einem Wärmesensor (51) zur Ermittlung der Temperatur der Zentraleinheit und zur Erzeugung eines Signals proportional zur Temperatur, und

einer Steuereinrichtung, die mit der Zentraleinheit (17) und dem Wärmesensor (51) verbunden ist, um die Betriebsfrequenz der Zentraleinheit in Abhängigkeit von dem Signal zu ändern,

**dadurch gekennzeichnet, daß**

die Steuereinrichtung einen programmierbaren Speicher (54) einer Tastatursteuereinheit (31) zur Speicherung eines programmierbaren kritischen Temperaturwertes (T2), und

einen Komparator (55) zum Vergleich eines Signals entsprechend dem proportionalen Signal mit dem programmierbaren kritischen Wert und zur Erzeugung eines Unterbrechungssignals (SI), wenn die Temperatur der Zentraleinheit den programmierbaren kritischen Temperaturwert (2) erreicht, aufweist, und

daß die Chip-Gruppe eine Einrichtung aufweist, die auf das Unterbrechungssignal (SI) anspricht, um die Betriebsfrequenz der Zentraleinheit zu verringern oder zu erhöhen, wenn ihre Temperatur den vorbestimmten kritischen Temperaturwert (T2) über- bzw. unterschreitet.

2. Vorrichtung zur thermischen Steuerung einer Zentraleinheit nach Anspruch 1, die einen Generator (57) für ein Zeitsteuersignal (CK) aufweist,
**dadurch gekennzeichnet, daß**
die Einrichtung zum Verringern oder Erhöhen der Betriebsfrequenz der Zentraleinheit eine Einrichtung (58) zum Empfang des Unterbrechungssignals (SI), eine Einrichtung zum Teilen des Zeitsteuersignals (CK) und eine Einrichtung (61) zur Erzeugung einer verringerten Betriebsfrequenz in Abhängigkeit von der Teilung des Zeitsteuersignals (CK) aufweist, wenn sich die Temperatur der Zentraleinheit (17) auf den programmierbaren kritischen Temperaturwert (T2) erhöht.

3. Vorrichtung zur thermischen Steuerung einer Zentraleinheit nach Anspruch 1, bei der die Zentraleinheit in einen elektronischen Rechner montiert ist, bestehend aus einer Grundkonstruktion mit wenigstens einer inneren Wand (19) aus Metall,
**dadurch gekennzeichnet, daß**
wenigstens ein Teil einer Außenfläche der Zentraleinheit (17) ständig mit der inneren Wand aus Metall in Kontakt gehalten wird, so daß die innere Wand aus Metall die Funktion der Ableitung der Wärme durchführt, die von der Zentraleinheit während deren Betrieb erzeugt wird.

## Revendications

1. Dispositif (48) destiné au contrôle thermique d'une unité centrale (UC) (17) pouvant être commandée par un jeu de puces (28) afin de fonctionner à plusieurs fréquences de fonctionnement (fl à fn), comprenant :

   un capteur thermique (51) permettant de détecter la température de ladite UC et de générer un signal proportionnel à ladite température, et des moyens de commande connectés à ladite UC (17) et audit capteur thermique (51) afin de faire varier la fréquence de ladite UC en fonction dudit signal, caractérisé en ce que lesdits moyens de commande comprennent une mémoire programmable (54) d'un contrôleur de clavier (31) adaptée pour stocker une valeur de température critique programmable (T2) et des moyens de comparaison (55) pour comparer un signal correspondant audit signal proportionnel avec ladite valeur critique programmable et générer un signal d'interruption (SI) lorsque la température de ladite UC atteint ladite valeur de température critique programmable (T2) et en ce que ledit jeu de puces comprend des moyens répondant audit signal d'interruption (SI) afin de diminuer ou d'augmenter la fréquence de fonctionnement de l'UC lorsque sa température dépasse ou chute respectivement en dessous de ladite valeur de température critique prédéterminée (T2).

2. Dispositif destiné au contrôle thermique d'une UC selon la revendication 1, comprenant un générateur (57) pour un signal d'horloge (CK), caractérisé en ce que lesdits moyens permettant de diminuer ou d'augmenter la fréquence de fonctionnement de l'UC comprennent des moyens (58) pour recevoir ledit signal d'interruption (SI), des moyens pour la division dudit signal d'horloge (CK) et des moyens (61) pour générer une fréquence de fonctionnement réduite en réponse à la division dudit signal d'horloge (CK) lorsque la température de l'UC (17) augmente jusqu'à ladite valeur de température critique programmable (T2).

3. Dispositif destiné au contrôle thermique d'une UC selon la revendication 1, dans lequel ladite UC est montée dans un calculateur électronique comprenant une structure de corps présentant au moins une paroi interne métallique (19), caractérisé en ce qu'au moins une partie de la surface externe de ladite UC (17) est maintenue constamment en contact avec ladite paroi interne métallique, ladite paroi interne métallique ayant pour fonction de dissiper la chaleur dégagée par l'UC pendant son fonctionnement.

FIG. 1

FIG. 3

Fig. 2